# EUROPEAN PATENT SPECIFICATION

(11) **EP 0 797 338 B1**
(45) Date of publication and mention of the grant of the patent: **22.03.2006**
(21) Application number: 97660017.1
(22) Date of filing: 20.02.1997
(51) Int. Cl.: H04M 7/00, H04M 3/42, H04M 11/06, H04M 3/50

(54) **Method and arrangement for inter-connecting a virtual-reality world and the real world for the purpose of establishing a real-time communications connection such as a telephone call connection**
Verfahren und Gerät zur Verbindung von einem Raum in virtueller Realität mit dem echten Raum zur Herstellung einer Echtzeit-Kommunikation wie einer Fernsprechanrufverbindung
Méthode et dispositif pour interconnecter un espace à réalité virtuelle avec l'espace réel pour réaliser une connexion de communication en temps réel telle qu'une connexion d'appel téléphonique

(30) Priority: 20.03.1996 FI 961291
(43) Date of publication of application: 24.09.1997
(73) Proprietor: Elisa OYJ, 00380 Helsinki (FI)
(72) Inventor: Tähtinen, Jyri, 00720 Helsinki (FI); Lehtinen, Kari, 01690 Vantaa (FI); Linturi, Risto, 00840 Helsinki (FI)
(74) Representative: Lipsanen, Jari Seppo Einari

(56) References cited:
- WO-A-88/02965
- ANONYMOUS: "On-line Desktop Address Book and Auto Dialer." IBM TECHNICAL DISCLOSURE BULLETIN, vol. 35, no. 2, 1 July 1992 (1992-07-01), pages 439-441, XP002132256 New York, US
- ANONYMOUS: "Method for Dialing Automated Rolodex Topic Entry" IBM TECHNICAL DISCLOSURE BULLETIN, vol. 37, no. 2A, 1 February 1994 (1994-02-01), pages 91-92, XP002132257 New York, US
- ANONYMOUS: "Three Dimensional Windows for Virtual Reality Environment." IBM TECHNICAL DISCLOSURE BULLETIN, vol. 35, no. 4A, 1 September 1992 (1992-09-01), pages 65-68, XP002132258 New York, US

## Description

The present invention relates to a method according to the preamble of claim 1 for interconnecting a virtual-reality world and the real world for the purpose of establishing a real-time communications connection such as a telephone call connection.

The invention also concerns an apparatus for linking a virtual-reality world with the real world.

So far virtual-reality techniques have chiefly been used in conjunction with computer games for creating a real-world-mimicking virtual-reality environment in which a player can move during a computer simulation.

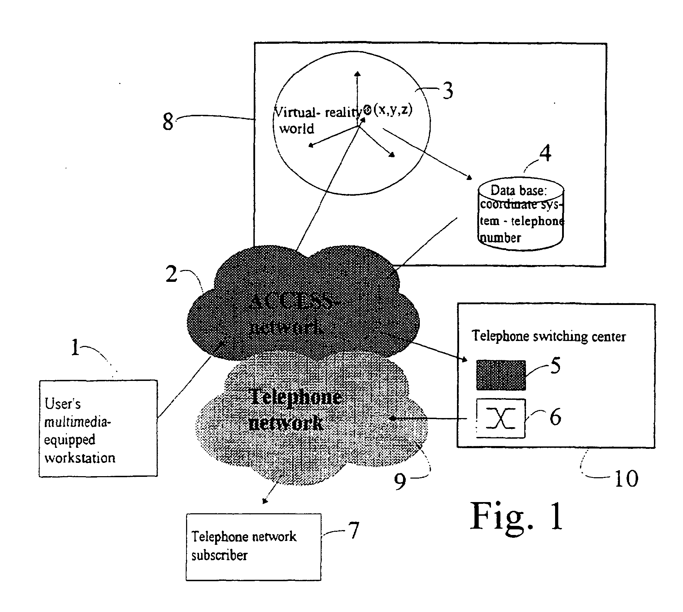

The anonymous article 'On-line Desktop Address Book and Auto Dialer.' IBM TECHNICAL DISCLOSURE BULLETIN, vol. 35, no. 2, 1 July 1992 (1992-07-01), pages 439-441, XP002132256 New York, US, discloses an on-line desktop address book and auto dialer wherein a user can navigate on a virtual, three-dimensional (see Fig. 1) address book, and upon finding the desired user and clicking on the "Dial" push-button, establish a telephone call with the desired user over a computer's modem card, if one is provided.

The present invention is based on implementing the selection of a telephone network subscriber by means of an addressable point in the coordinate space of a given virtual-reality world, which in practice means that there exists a data structure in which the subscriber number information is associated with a certain point of the coordinate space of the virtual-reality world. Furthermore, the communications connection from the user of the virtual-reality world to a subscriber of the telephone network is established over the same communications channel as is used for establishing the connection toward the virtual-reality world (thus avoiding the disconnection of data communications connections for establishing a voice connection in the case of, e.g., a user operating over a modem/ISDN channel from home). For the purpose of establishing a bidirectional voice connection between the data communications network and the telephone network, the invention makes use of a conversion scheme applied between the digitally coded information of the data communications network and the coded voice signal of the telephone network.

More specifically, the method according to the invention is characterized by what is stated in the characterizing part of claim 1.

Furthermore, the arrangement according to the invention is characterized by what is stated in the characterizing part of claim 3.

The invention offers significant benefits.

By virtue of the virtual-reality interconnection scheme, call number selection is simplified and the novel technique also offers a natural way of establishing voice call and teleconferencing sessions. Furthermore, the same virtual-reality technique makes it possible to use future home terminal equipment for the purpose of subscribing to and using a plurality of other services, too.

In the following the invention is described in greater detail with the help of exemplifying embodiments by making reference to the appended drawing in which

Figure 1 shows diagrammatically the method according to the invention.

Referring to Fig. 1, the user establishes a connection from his/her multimedia-equipped workstation 1 (located, e.g., in home) via a datacommunications network (an access network) 2 to a virtual-reality service 8. In the virtual-reality world 3, which may represent, e.g., a city modelled with streets and buildings, the user can navigate by means of the city map and/or three-dimensional coordinates.

By navigating to a desired point in the virtual-reality world 3, the user 1 can address, via coordinate points x,y,z of the three-dimensional virtual-reality world 3, the subscribers 7 of the real-world telephone network 9 associated with said coordinate points, thus establishing a voice connection to said subscribers if so desired. The voice connection is established by pointing a desired subscriber 7 of the telephone network 9 in the virtual-reality world 3 (analogously to hyperlinks in a hypertext document), whereby the server computer of the virtual-reality service 8 selects from its data base 4 the desired subscriber number of the telephone network 9 corresponding to the addressed virtual-world coordinate point.

Then, a voice application is started on the user workstation 1 and the voice connection is formed in digitally-coded format superimposed on the data communications protocols over the same data communications channel 2 which is already being used for data communications so as to access a telephone switching center 10 where the required voice-signal conversions 5 of the data signal are performed and the call 6 is forwarded to the called subscriber 7 of the telephone network 9. When the called subscriber 7 of the telephone network 9 answers, the return channel is established via the switching center 10 (making the corresponding signal conversions) over the data communications channel on the basis of the calling party address in the access network.

The implementation techniques of the diagram parts are listed below in an exemplifying manner:
1. User workstation, multimedia accessories (sound card, videoconferencing set), data communications facilities (modem, ISDN, LAN, ATM).
2. Access network, which may comprise a telephone network (modem-accessible), an ISDN network, a local-access network or interconnected LANs (frame-relay) or a wide-band network (ATM).
3. The virtual-reality world may be implemented by means of a VRML (Virtual Reality Mark-up/Modelling Language) application in which the user can navigate using a browser. While this area of virtual-reality techniques is undergoing a strong phase of development, VRML is currently one of the most viable contenders in the field. The coordinates of the 3D world can be provided with hyperlinks associated with desired points or objects of the coordinate space.
4. The data base can be a tailored application for the use of the present invention, or alternatively, a distributed X.500 directory containing information on the hyperlink points of the coordinate space in the virtual-reality world and the corresponding addresses (telephone numbers) of the telephone/mobile phone/e-mail communications network.
5. Conversion of digitized voice for transmission over a telephone network takes place by means of a dedicated conversion system which is easiest to implement utilizing the sound cards of PC equipment. This function can be formed into an integral service of a telephone switching center (analogously to the trunking service between GSM and analog-signal telephone networks). An example of such an implementation is the LanPhone network offered by L.M. Ericsson Co.
6. Call routing to the telephone network subscriber is implemented in a conventional manner.
7. The telephone network subscriber receives the call in a conventional manner.

Another service provided by the virtual-reality world 3 is the location (tracing) of a mobile-phone subscriber in the coordinate space of the virtual-reality world. For instance, the location of a GSM subscriber can be inquired in the virtual-reality world 3 by the mobile-phone number of the subscriber, whereby the server computer traces the location of the GSM mobile phone from the home register of the mobile-phone network computer down to the location of the base station serving the phone. This information is returned to the inquiring party as co-ordinates of the virtual-reality world, or alternatively, he/she can be transferred in the virtual-reality world into the same "space" with the mobile-phone subscriber.

A third service provided by the virtual-reality world 3 is a conferencing session in a virtual meeting room for the subscribing parties. Such a virtual meeting can be participated in by users who have navigated in the virtual-reality world and into the meeting room by a voice connection or possibly using a video communications set; additionally, the conferencing session may be attended by subscribers of the real-world telephone network and/or teleconferencing system users.

Voice connection to real-world subscribers can be established in the manner described earlier, whereby also the conferencing phone services of switching centers can be utilized.

Not limited to real-time telephone connections, the above-described techniques further allow the virtual-reality world 3 to be used for establishing other types of real-time telecommunication connections such as telefax and data connections.

The connection between the subscribers of the virtual-reality world and the telephone network may also be established by displaying in the virtual-reality world (in the form of a virtual telephone directory) the telephone number of the called subscriber of the telephone network, after which the user can call the displayed number over the conventional telephone network. This form of connection requires a separate telephone channel and a data communications channel.

## Claims

1. A method of interconnecting a virtual-reality application running on a server computer of a virtual-reality service providing a representation of a virtual-reality world (3) and subscribers of the real world telephone network (7) via a telecommunications network for the purpose of establishing a real-time communications connection such as a telephone call connection, in which method
- a representation of a three-dimensional virtual-reality world (3) is formed, and
- a user is allowed to establish a data connection from his/her multimedia-equipped workstation (1) via a telecommunications network (2) to the virtual-reality service (3, 8),
**characterized in that**
- a telephone network subscriber (7) is allowed to be selected by the user on the basis of a point in a coordinate space of the representation of the virtual-reality world (3), and
- a voice application is allowed to be started on the user workstation (1) and a voice connection is formed in digitally-coded format superimposed on the data communications protocols over the same data communications channel (2) which is already being used for data communications so as to access a telephone switching center (10) for forwarding the voice connection (6) to the called subscriber (7) of the telephone network (9).

2. A method as defined in claim 1, **characterized in that** the virtual-reality application (3) is interconnected with the subscribers of the real world telephone network (7) by means of a data base 4) stored in the server computer of the virtual-reality service (3).

3. A method as defined in claim 1, **characterized in that** a return channel is established via the switching center (10) over the data communications channel on the basis of the calling party address in the access network.

4. A method as defined in claim 1, **characterized in that** the location of a mobile-phone subscriber is traced in the coordinate space of the virtual-reality world, whereby the server computer traces the location of the GSM mobile phone from the home register of the mobile-phone network computer down to the location of the base station serving the phone and this information is returned to the inquiring party as coordinates of the representation of the virtual-reality world.

## Patentansprüche

1. Verfahren zur Verbindung von einer Anwendung in virtueller Realität, welche auf einem Serverrechner eines Dienstes in virtueller Realität läuft, welcher eine Darstellung einer Welt in virtueller Realität (3) bereitstellt, und Teilnehmern des reellen Telefonnetzes (7) über ein Telekommunikationsnetz zur Herstellung einer Echtzeit-Kommunikationsverbindung, wie etwa einer Fernsprechanrufverbindung, wobei in dem Verfahren
- eine Darstellung einer dreidimensionalen Welt in virtueller Realität (3) gebildet wird; und
- einem/r Benutzer/in ermöglicht wird; eine Datenverbindung von seiner/ihrer mit Multimedia ausgestatteten Arbeitsplatzstation (1) über ein Telekommunikationsnetz (2) mit dem Dienst in virtueller Realität (3, 8) aufzubauen,
**dadurch gekennzeichnet, daß**
- ermöglicht wird, daß von dem Benutzer ein Telefonnetzteilnehmer (7) auf der Basis eines Punkts im Koordinatenraum der Darstellung der Welt in virtueller Realität (3) ausgewählt wird, und
- ermöglicht wird, daß eine Sprachanwendung auf der Arbeitsstation (1) des Benutzers gestartet wird und eine Sprachverbindung in digital-kodiertem Format gebildet wird, welche auf den Datenkommunikationsprotokollen über den gleichen Datenkommunikationskanal (2) überlagert ist, welcher schon für die Datenkommunikation verwendet wird, um auf eine Telefonvermittlungsstelle (10) zuzugreifen, um die Sprachverbindung (6) zu dem angerufenen Teilnehmer (7) des Telefonnetzes (9) weiterzuleiten.

2. Verfahren nach Anspruch 1, **dadurch gekennzeichnet, daß** die Anwendung in virtueller Realität (3) mittels einer in dem Serverrechner des Dienstes in virtueller Realität (3) gespeicherten Datenbank (4) mit den Teilnehmern des reellen Telefonnetzes (7) verbunden ist.

3. Verfahren nach Anspruch 1, **dadurch gekennzeichnet, daß** über die Vermittlungsstelle (10) basierend auf der Adresse der anrufenden Seite in dem Zugangsnetz über den Datenkommunikationskanal ein Rückkanal aufgebaut wird.

4. Verfahren nach Anspruch 1, **dadurch gekennzeichnet, daß** der Standort des Mobiltelefonteilnehmers in dem Koordinatenraum des Raums in virtueller Realität verfolgt wird, wobei der Serverrechner den Standort des GSM-Mobiltelefons von dem Heimatregister des Mobiltelefon-Netzwerkrechners hinunter zu dem Standort der Basisstation, die das Telefon betreut, verfolgt, und diese Information zu der anfragenden Seite als Koordinaten der Darstellung des Raums in virtueller Realität zurück gesendet wird.

## Revendications

1. Procédé pour interconnecter une application de réalité virtuelle tournant sur un ordinateur serveur d'un service de réalité virtuelle fournissant une représentation d'un monde de réalité virtuelle (3) et des abonnés du réseau téléphonique du monde réel (7) via un réseau de télécommunications dans le but d'établir une connexion de communications en temps réel comme une connexion d'appel téléphonique, dans lequel procédé
- une représentation d'un monde de réalité virtuelle tridimensionnel (3) est formée, et
- un utilisateur est autorisé à établir une connexion de données à partir de son poste de travail multimédia (1) par le biais d'un réseau de télécommunications (2) au service de réalité virtuelle (3, 8),
**caractérisé en ce que**
- un abonné de réseau téléphonique (7) peut être choisi par l'utilisateur sur la base d'un point dans un espace de coordonnées de la représentation du monde de réalité virtuelle (3), et
- une application vocale peut être démarrée sur le poste de travail de l'utilisateur (1) et une connexion vocale est formée dans un format codé numériquement, superposée sur les protocoles de transmission de données sur le même canal de transmission de données (2) qui est déjà utilisé pour la transmission de données afin d'accéder à un centre de commutation téléphonique (10) pour retransmettre la connexion vocale (6) à l'abonné appelé (7) du réseau téléphonique (9).

2. Procédé selon la revendication 1, **caractérisé en ce que** l'application de réalité virtuelle (3) est interconnectée avec les abonnés du réseau téléphonique du monde réel (7) au moyen d'une base de données (4) stockée dans l'ordinateur serveur du service de réalité virtuelle (3).

3. Procédé selon la revendication 1, **caractérisé en ce qu'**un canal de retour est établi via le centre de commutation (10) sur le canal de transmission de données sur la base de l'adresse de l'appelant dans le réseau d'accès.

4. Procédé selon la revendication 1, **caractérisé en ce que** l'emplacement d'un abonné de téléphone mobile est suivi dans l'espace de coordonnées du monde de réalité virtuelle, de telle manière que l'ordinateur serveur suit l'emplacement du téléphone mobile GSM à partir du registre d'accueil de l'ordinateur du réseau de téléphone mobile jusqu'à l'emplacement de la station de base servant le téléphone et cette information est retournée au demandeur en tant que coordonnées de la représentation du monde de réalité virtuelle.
